# EUROPEAN PATENT APPLICATION

(11) **EP 2 046 000 A1**
(43) Date of publication of application: **08.04.2009**
(21) Application number: 07019457.6
(22) Date of filing: 04.10.2007
(51) Int. Cl.: H04M 1/725

(54) **Method for the reduction of radiation of a wireless radio telecommunication system**

(71) Applicant: Orchid Electronics Schweiz GmbH, 8135 Langnau am Albis (CH)
(72) Inventor: Schwager, Marc, 8135 Langnau am Albis (CH)
(74) Representative: Schmauder & Partner AG Patent- & Markenanwälte VSP

(57) **Abstract**

To further reduce the radiation of a radio communication system comprising a base station and mobile terminal devices the invention proposes to introduce a standby mode during which no synchronization signals as usual according to the prior art are exchanged between the base station and the mobile terminal devices. Both, the base station and the mobile terminal devices maintain listening watch for a wake-up signal on a particular transmission channel by which the standby-mode is ended and the normal communication mode (active mode) is attempted to be reestablished.

## Description

### Field of the invention

This invention relates to a method for operating a radio communication system comprising a base station (fixed part) and at least one mobile terminal device (portable part) under reduced radiation conditions, and to a corresponding radio communication system.

### Background of the invention

Radio communication systems radiating radio synchronization signals for the purpose of synchronising and which fall under particular standards like the international DECT standard are known. In these systems the mobile terminal devices are initially registered to the fixed part.

DECT (Digital Enhanced Cordless Telecommunications) system operates in the frequency range of 1880 - 1900 MHz in European countries. DECT features continuous Dynamic Channel Selection and Allocation. All standard DECT equipment is obliged to regularly transmit and scan its local radio environment and to maintain communication (linking) between the radio fixed part (base unit) and all portable parts (handsets). This scanning involves receiving and measuring local RF signal strengths on all idle channels. It is done as a background process and produces a list of free and occupied channels, one for each idle time-slot/carrier combination, to be used in the channel selection process for each and every registered handset link. An idle time-slot is always set-up on the least interfered channel available.

As a result, the fixed part of the system regularly transmits this high frequency pulses for synchronizing the DECT system (between all portable parts and the fixed part). This RF synchronization is needed for the integrated operation of the DECT system. However, the above-mentioned synchronization results in a constant transmission of high frequency pulses during the system idle state.

One approach to reduce radiation is switching off the synchronization signal when the portable part is returned and parked to the base which can be detected by means of sensors. Such sensors are commonly assigned to charging terminals. In this way, synchronization signal between the base and the portable part can be reduced or switched off when the two components are in contact. However, this technique limits to systems with only one fixed part (base) and one portable part (mobile terminal).

A further approach is disclosed in WO 2005/034489 A1. According to the method of WO 2005/034489 A1, a number of mobile terminals that are logged onto the base station is first detected, a quantity of virtual continuous-receiving status information is then defined and finally a comparison is made between the number of logged-on terminals with the quantity of virtual continuous-receive status information, the base station being switched to an idle operating mode if the number of terminals and quantity of information are equal and the base station remaining in a normal operating mode if this is not the case. This method has the obvious disadvantage that the reduction of radiation in the idle mode is possible only under particular conditions which may be true for most of the time and, therefore, there is no reduction of radiation for most of the time. Therefore, the reduction of radiation proposed by WO 2005/034489 A1 could be called a conditional or partial reduction.

### Object of the invention

The object of the invention is a reduction of the radiation beyond of the conditional or partial reduction of the prior art. The invention shall suggest an improved way so that the switching off of the synchronization signal for such system can be achieved for multiple portable parts configuration and without physical contact made between the portable parts and the fixed part.

The object of the invention is solved by the method according to claim 1 and the system according to claim 9. For operating a radio telecommunication system comprising a base station and one or more mobile.terminal devices registered at the base station according to the invention, the base station comprises at least one external communication service. The method according to the invention comprises an active mode, a stand-by mode and a wake-up mode. The registration comprises assigning a unique terminal identification code. During the active mode between the base station and at least one mobile terminal device or between one mobile terminal device and another mobile terminal device wireless two way communication is maintained. The wake-up mode can be initiated when the system is in said stand-by mode. During the wake-up mode, the base station or one of the mobile terminal devices send a particular wireless wake-up signal for a short time requesting initiating the active mode. During the stand-by mode, no communication is maintained between said base station and any mobile terminal device nor between any one mobile terminal device and any other mobile terminal device. During the stand-by mode the base station and one or more of the mobile terminal devices maintain listening to said wireless wakeup signal. The radiation is achieved since the stand-by mode is initiated from the active mode immediately or within a first predetermined time after the wireless two way communication between the base station and at least one mobile terminal device or between one mobile terminal device and another mobile terminal device is no longer maintained. From the wake-up mode the stand-by mode is re-initiated when the active mode has not been established during a second predetermined time.

To implement the reduction of radiation, a remote activation RF network is introduced in all components, namely the fixed part and all portable parts with a special remote activation identification referencing to the identification of the fixed part. This remote activation channel provides a separate channel of communication between components of the system while the system is not synchronized. This enables the switching off of the synchronization signal when the system goes to quiescent state whereby there is no data nor information interchanged between all portable parts and the fixed part, effectively when the system is at quiescent state. When there is initiation from any components of the system requiring the synchronization of the system for returning the system to normal state (such as incoming ringing or signalling fixed part or activity/entry at any portable parts), the invoking component sends the request ID through the remote activation RF channel to all other components to "wake up" all components. All components (fixed part and portable parts) of the system will resume to normal state whereby the original system RF - DECT RF in the case of the DECT system - resumes synchronization process when normal operation is resumed. In this way, the radiation is switched off when the system is idle. The remote activation RF channel is only active and activated at the point of waking up the system.

Particular embodiments of the invention are set out in the dependent claims.

It is advantageous when the wake-up mode is initiated by the base station when requested by an external communication services (claim 2) or when wake-up mode is established on request inputted to a mobile terminal device (claim 3). The wake-up mode can also be established when a sensor associated with the mobile terminal device and comprising a switch detecting that the device being rested on a power charging device detects that the mobile terminal device is removed from the power charging device (claim 4).

It is advantageous when the status of the system is displayed on the base station and/or the at least one mobile terminal device (claim 5).

The features mentioned above as well as those recited in the claims and described in the following examples, which features are to be used according to this invention, do not have to meet any exceptional requirements with respect to size, shape, choice of material and technical conception, so that the selection criteria known in the applicable fields can be adopted without restrictions.

### Brief description of the drawings

Further details, advantages and features of the subject of the present invention will be apparent from the following detailed description taken in conjunction with the accompanying drawings, wherein a method and a system according to this invention are explained in an exemplified form. In the following drawings
- Figure1: is the flow chart which illustrates the approach to reduced radiation at idle state;
- Figure 2: shows a mobile terminal originated call (out-going call) sequence;
- Figure 3: illustrates the steps for intercom call establishment;
- Figure 4: illustrates a mobile terminal originated communication for outgoing and intercom calls;
- Figure 5: illustrates a network originated, base station initiated, communication for incoming calls;
- Figure 6: is the network originated call sequence for in-coming calls;
- Figure 7: is a base block diagram; and

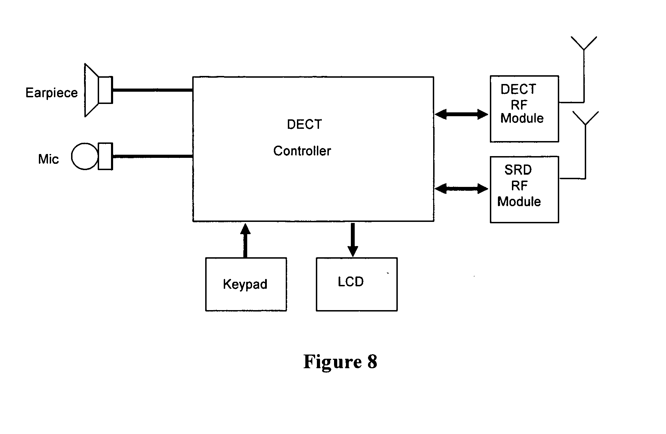

- Figure 8: is a mobile terminal block diagram.

### Detailed description of the preferred embodiments

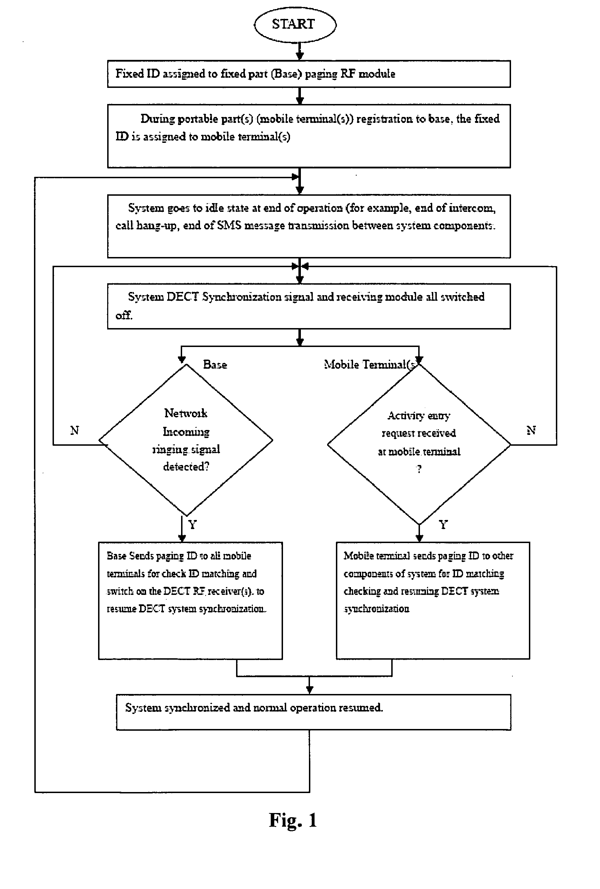

The following describes the flow chart in figure 1 which illustrates the approach to reduced radiation at idle state.

In order to achieve similar results to reduce radiation for multiple portable parts (mobile terminals) situation, it is necessary to allow all portable parts of the systems to be able to communicate to each other while they are not in physical contact, made by electrical or other sensors to the fixed part when synchronization signal is not present. A separate "remote activation" or communication channel is therefore added to the system for this purpose.

Different from the original system, a separate remote activation RF module is added in the fixed part (base) and the portable parts (mobile terminals). During system registration, whereby mobile terminals are registered to the base, the remote activation ID is also entered to mobile terminal remote activation module. This remote activation ID is used for signalling other components of the system during idle state when any of the mobile terminals or base tries to initiate the reestablishment of the system synchronization. This remote activation receiver of the RF module will always be switched on at idle state at base and all mobile terminals.

Upon the completion of the installation of the system and when it goes idle, the base synchronization signal of the system will be switched off. Actually, all DECT RF modules are switched off at base and mobile terminals. However, the remote activation receiver of the RF module will always be switched on at idle state at base and all mobile terminals.

If there is an incoming call from the network connection to the base is detected at the base, the base will use the additional RF remote activation channel to transmit the ID to all mobile terminals.

Mobile terminals, upon receiving the ID and confirmed the matching to the registered ID, will re-initiates the DECT RF receive for synchronization process.

Upon synchronization process completion, the system is back to normal state and the call information will be transferred based on the original DECT protocol.

Similarly, if there is user initiated entry at any mobile terminal, the terminal will transmit the ID via its RF remote activation channel to other mobile terminals and the base. Other mobile terminals and the base, upon receiving the ID and confirmed the matching to the registered ID, will re-initiates the DECT RF receive for synchronization process with the base resuming transmission of synchronization signal. Upon synchronization process completion, the system is back to normal state and the call information will be transferred based on the original DECT protocol.

In the DECT system, there are three types of communication modes which requires the system to switch from idle state to normal state, namely:
- Mobile terminal originated (outgoing) call activity
- Mobile terminal originated inter-terminal (intercom) activity
- Network originated incoming call activity

The following is a brief description for these three modes of operation:

### Mobile Terminal Originated (Out-going Call) Activity

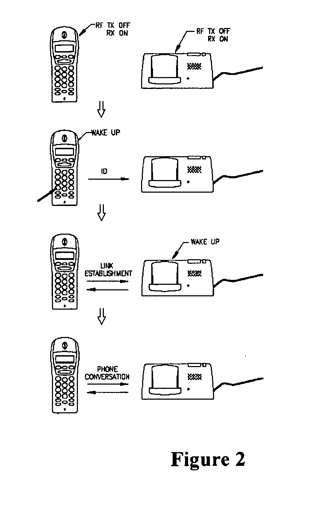

During idle state, if a user tries to establish a call, the mobile terminal will switch on it's own DECT RF module receiver. Figure 2 shows the sequence as how this works. It's remote activation RF module will transmit the registered ID to the base and other mobile terminals, so that their respective DECT RF modules are switched on and re-establish a link. The DECT communication channel between the mobile terminals and the base is then established and an out going call will be made accordingly.

### Mobile Terminal Originated inter-terminal (Intercom) activity

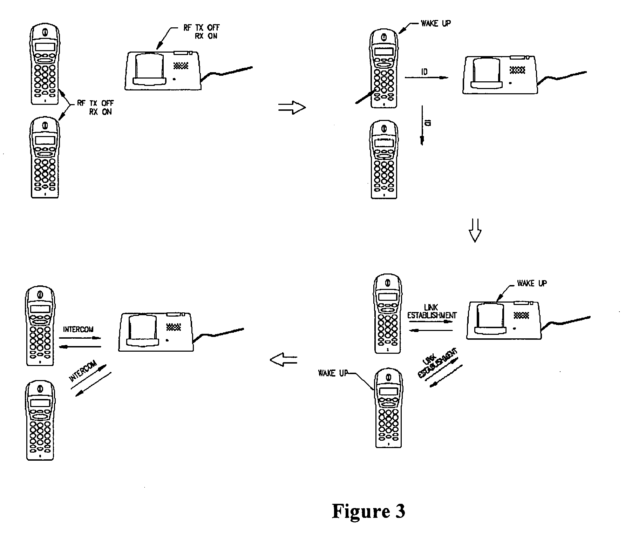

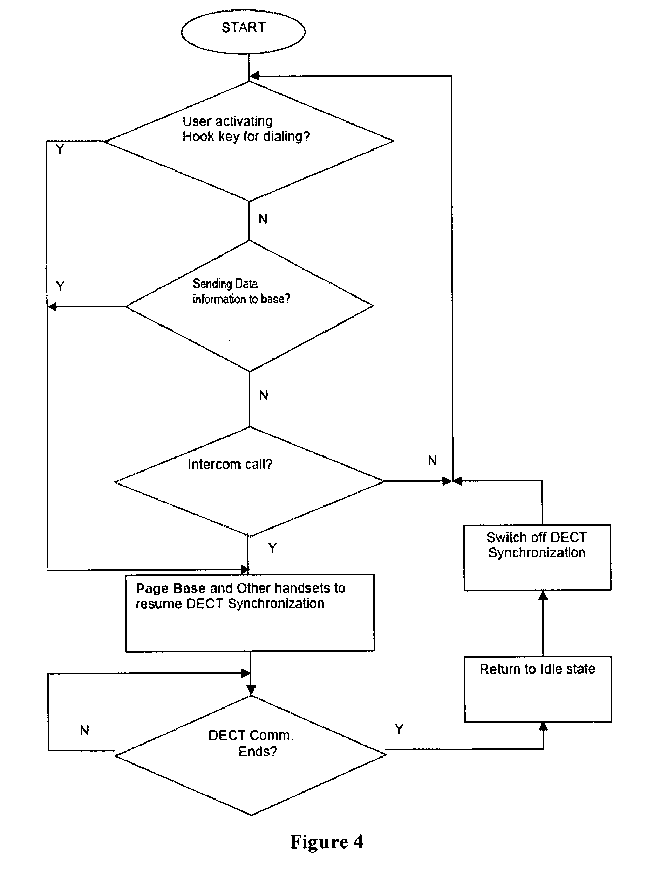

Figure 3 illustrates the steps for intercom call establishment. If there is an intercom call invoked from a mobile terminal to establish a call to another mobile terminal on the same DECT system, the call originating mobile terminal will switch on its own DECT RF module receiver. Figure 3 illustrates the steps for intercom call establishment. Its remote activation RF module will transmit the registered ID to the base and other mobile terminals. Upon receiving and confirming the matching of the registered ID, their respective DECT RF modules are switched on and re-establish a link. When the system synchronization is established, the intercom request will be made according to the DECT protocol. The called mobile terminal will be signalled for intercom ringing and is ready for answering requests for intercom calls. The mobile terminal originated call flow chart is shown in Figure 4.

### Network Originated Incoming call activity

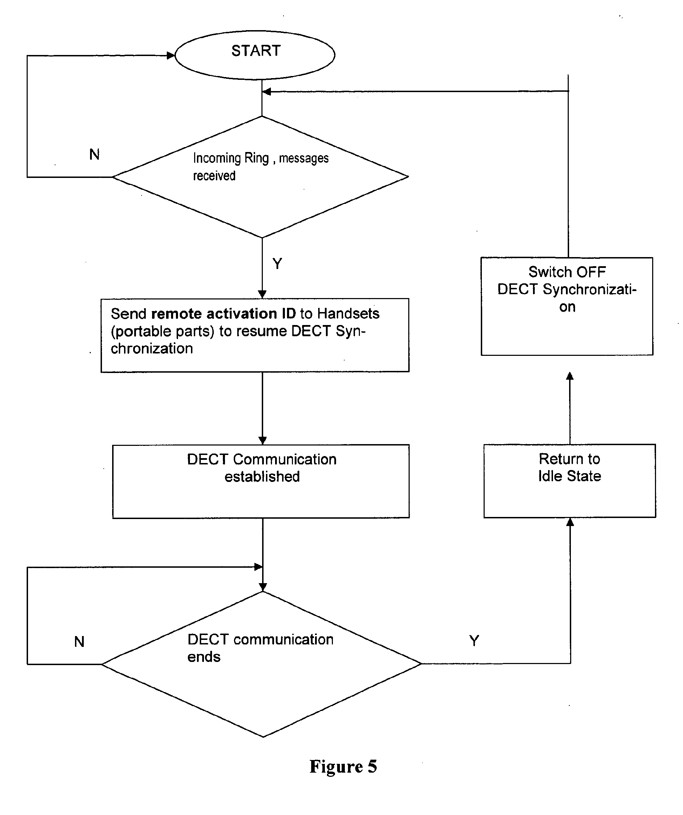

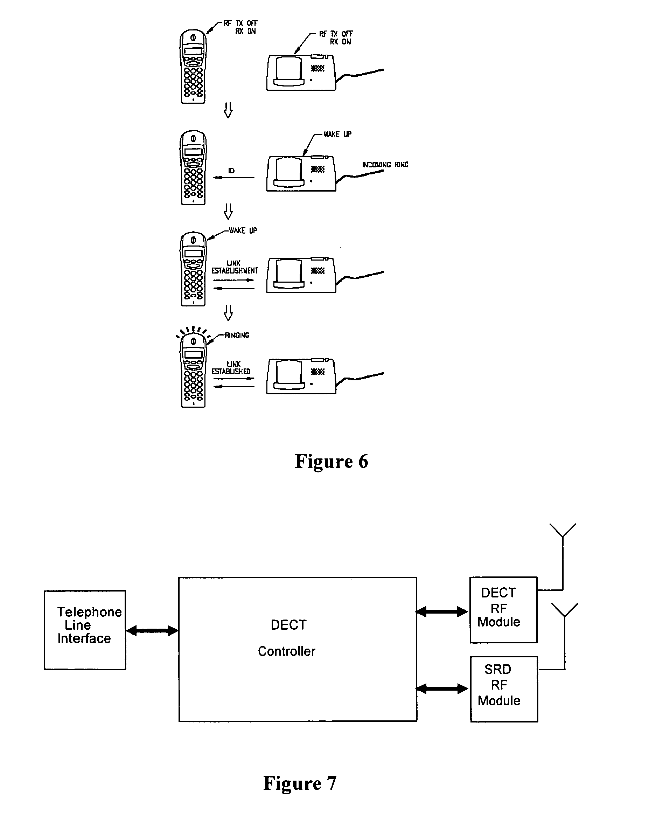

The flow chart for re-establishing the DECT communication is shown in figure 5. Figure 6 shows the activation sequence example. When there is an incoming network signal received at the base, the base will switch on its DECT RF module and synchronization signal will be resumed. The remote activation RF module of the base will transmit the registered ID to mobile terminal(s) to signal the activity. Upon receiving and confirming the matching of the registered ID, the mobile terminal(s) respective DECT RF modules are switched on for establishing a link. The DECT communication channel between the mobile terminal(s) and the base is then established and incoming ring status or other data information can be transmitted to mobile terminals for further response.

The separate "remote activation" RF channel is utilized in this DECT system to transmit the unique ID to wake up the portable units (handsets) or fixed units (base). At idle state, the DECT RF modules are completely switched off, leaving only the remote activation module RF receivers maintaining at active mode periodically to monitor wake-up ID sent by other components of the system which are the other mobile terminals or the base.

Depending on application requirements, the RF remote activation module can be operated at any radio frequency. A typical example is to use the Short Range Device channel between 868 and 869MHz.

The functional blocks of the portable unit and fixed unit are shown in Figure 6 and Figure 7 including the SRD as an example of Radio remote activation hardware.

While the invention has been particularly shown and described with reference to a certain preferred embodiment, it will be understood by those skilled in the art that various alterations and modifications in form and in detail may be made therein. Accordingly, it is intended that the following claims cover all such alterations and modifications as may fall within the true spirit and scope of the invention.

## Claims

1. A method for operating a radio telecommunication system comprising a base station and one or more mobile terminal device registered at the base station, which base station comprises at least one external communication service, wherein said method comprises an active mode, a stand-by mode and a wake-up mode, wherein by said registration a unique terminal identification code is assigned, wherein during said active mode wireless two way communication between said base station and at least one mobile terminal device and/or between one mobile terminal device and another mobile terminal device is maintained, wherein during said stand-by mode no communication is maintained between said base station and any mobile terminal device nor between any one mobile terminal device and any other mobile terminal device, wherein during said stand-by mode said base station and one or more of said at least one mobile terminal device maintains listening for a wireless wake-up signal,
wherein said wake-up mode can be initiated when the system is in said stand-by mode, wherein during said wake-up mode the base station or one of the mobile terminal devices sends a wireless wake-up signal requesting said active mode,
**characterized in that**
said stand-by mode is initiated from said active mode immediately or within a first predetermined time after said wireless two way communication between said base station and at least one mobile terminal device or between one mobile terminal device and another mobile terminal device is no longer maintained, and from said wake-up mode when said active mode has not been established during a second predetermined time.

2. The method according to claim 1, **characterized in that** said wake-up mode is initiated by the base station when requested by at least one of said external communication services.

3. The method according to claim 1 or 2, **characterized in that** said wake-up mode is established on request inputted to a mobile terminal device.

4. The method according to any of claims 1 to 3, **characterized in that** a mobile terminal device comprises a sensor switch detecting said device being rested on a power charging device and that said wake-up mode is established when said mobile terminal device is removed from said power charging device.

5. The method according to any of claims 1 to 4, **characterized in that** the status of said system is displayed on the base station and/or the at least one mobile terminal device.

6. A radio telecommunication system comprising a base station and one or more mobile terminal devices registered at the base station, which base station comprises at least one external communication service, wherein said system is configured to comprise an active mode, a stand-by mode and a wake-up mode, wherein by said registration a unique terminal identification code is assigned, wherein the system is further configured to, during said active mode, establish wireless two way communication between said base station and at least one mobile terminal device and/or between any one mobile terminal device and another mobile terminal device, wherein said system is configured so that said wake-up mode can be initiated when the system is in said stand-by mode, wherein the system is configured so that, during said wake-up mode, the base station or the mobile terminal devices sends a particular wireless wake-up signal requesting to initiate said active mode, wherein said system is configured so that, during said stand-by mode, no communication is maintained between said base station and any mobile terminal device nor between one mobile terminal device and any other mobile terminal device, wherein during said stand-by mode said base station and one or more of said at least one mobile terminal device maintains listening to said wireless wakeup signal,
**characterized in that**
the system is configured so that said stand-by mode is initiated from said active mode immediately or within a first predetermined time after said wireless two way communication between said base station and at least one mobile terminal device or between one mobile terminal device and another mobile terminal device is no longer maintained and from said wake-up mode when said active mode has not been established during a second predetermined time.

7. The system according to claim 6, **characterized in that** said base station is configured to initiate said wake-up mode when requested by at least one of said external communication services.

8. The system according to claim 6 or 7, **characterized in that** said mobile terminal device comprises input means to request establishing said wake-up mode.

9. The system according to any of claims 6 to 8, **characterized in that** a mobile terminal device comprises a sensor switch detecting said device being rested on a power charging device initiating said wake-up mode when said mobile terminal device is removed from said power charging device.

10. The system according to any of claims 6 to 9, **characterized in that** said base station and/or said at least one mobile terminal comprises a display for the status of the system.
